# EUROPÄISCHE PATENTANMELDUNG

(11) **EP 4 361 996 A2**
(43) Veröffentlichungstag der Anmeldung: **01.05.2024**
(21) Anmeldenummer: 24162612.6
(22) Anmeldetag: 21.08.2020
(51) Int. Cl.: G08G 1/097

(54) **VERFAHREN UND SYSTEM ZUR ÜBERWACHUNG EINER ABSICHERUNG EINER STRASSENBAUSTELLE**

(62) Teilanmeldung aus: 20192076.6
(71) Anmelder: CM1 GmbH, 91207 Lauf an der Pegnitz (DE)
(72) Erfinder: KALUZA, Sebastian, 80639 München (DE)
(74) Vertreter: PATERIS Patentanwälte PartmbB

(57) **Zusammenfassung**

Die Erfindung betrifft ein Verfahren zur Überwachung einer Absicherung einer Straßenbaustelle (4), mit den Schritten:
(S100) Absichern der Straßenbaustelle (4) mit zumindest einer Sicherungseinrichtung (6a, 6b, 6c, 6d, 6e, 6f, 6g, 6h), wobei die Sicherungseinrichtung (6a, 6b, 6c, 6d, 6e, 6f, 6g, 6h) ein Navigations-Modul (8), eine Kamera (10) und eine Datenübertragungseinrichtung (12) zur drahtlosen Datenübertragung aufweist,
(S200) Bestimmen von einem Positions-Datensatz (PDS) indikativ für eine aktuelle Ist-Position der Sicherungseinrichtung (6a, 6b, 6c, 6d, 6e, 6f, 6g, 6h) mit dem Navigations-Modul (8),
(S400) Erfassen von einem Referenzbild-Datensatz (RDS) mit der Kamera (10) indikativ für einen initialen Zustand der Absicherung,
(S600) Erfassen eines Kontrollbild-Datensatzes (KDS) indikativ für einen aktuellen Zustand der Absicherung,
(S800) Bestimmen eines Korrektur-Datensatzes (KRS) zur Korrektur des Positions-Datensatzes (PDS) durch Auswerten zumindest des Referenzbild-Datensatzes (RDS) und des Kontrollbild-Datensatzes (KDS),
(S9000) Korrigieren des Positions-Datensatzes (PDS) mit dem Korrektur-Datensatz (KRS) um einen korrigierten Positions-Datensatz (PDS`) zu erzeugen,
(S10000) Vergleichen einer Ist-Position gemäß dem korrigierten Positions-Datensatz (PDS`) mit einer vorbestimmten Soll-Position der Sicherungseinrichtung (6a, 6b, 6c, 6d, 6e, 6f, 6g, 6h), und
(S11000) Erzeugen eines Alarmsignals (AS1), wenn die Ist-Position von der Soll-Position abweicht.

## Beschreibung

Die Erfindung betrifft ein Verfahren zur Überwachung einer Absicherung einer Straßenbaustelle.

Straßenbaustellen an Verkehrswegen, wie z.B. an öffentlichen Straßen, bedürfen einer Absicherung. Hierzu wird in einem ersten Schritt eine verkehrsrechtliche Anordnung (VRA) für die abzusichernde Straßenbaustelle erstellt, der gegebenenfalls einer zuständigen Behörde zur Genehmigung vorgelegt wird.

Die verkehrsrechtliche Anordnung beinhaltet Anweisungen und Auflagen zur Verkehrssicherung für Arbeiten an oder neben einer Straße. Es werden die Beschilderung und die Straßenmarkierungen detailliert beschrieben und festgelegt. Anschließend wird die verkehrsrechtliche Anordnung umgesetzt. Hierzu werden Sicherungseinrichtungen gemäß der verkehrsrechtlichen Anordnung aufgestellt.

Ferner ist in vorgeschriebenen zeitlichen Intervallen, üblicherweise mehrmals täglich, eine Kontrolle der Absicherung der Straßenbaustelle vorgeschrieben, die sehr personalintensiv ist. Um hier Abhilfe zu schaffen ist aus der DE 10 2014 104 573 B4 ein automatisiertes Verfahren zur Absicherung von Straßenbaustellen an Verkehrswegen bekannt, bei dem einem technischen Kontrollgerät ein Absicherungsplan in maschinenlesbarer Form zur Verfügung steht. Ein technisches Kontrollgerät führt eine automatisierte Kontrolle durch und prüft, ob die durchgeführte Absicherung den Vorgaben des maschinenlesbaren Absicherungsplans entspricht. Hierzu wird die Position eines Absicherungselementes mit einem dem Absicherungselement zugeordneten GPS-System bestimmt und zu dem Kontrollgerät übertragen, das einen Vergleich mit dem maschinenlesbaren Absicherungsplan durchführt. Jedoch weisen GPS-Systeme lediglich eine eingeschränkte Genauigkeit auf, sodass so nicht alle Abweichungen zuverlässig erfasst werden können.

Aus der DE 10 2018 007 632 A1 bzw. der EP 3 629 312 A1 ist ein weiteres System zur Bestimmung der Position von Verkehrsleiteinrichtungen bekannt, wobei das System neben einer Schnittstelleneinheit eine positionsbestimmende Sensoreinheit aufweist. Ferner kann die Sensoreinheit ein Gyroskop, einen Beschleunigungssensor, ein Magnetometer, ein Barometer, einen Feuchtigkeitssensor oder einen Temperatursensor aufweisen. Dem Stand der Technik ist gemeinsam, dass alle dort genannten Systeme die Position der Verkehrsleiteinrichtungen nur sehr ungenau erfassen können.

Es besteht Bedarf daran, Wege aufzuzeigen, wie auf einfachem Wege eine exakte Positionserfassung erreicht werden kann.

Die Aufgabe der Erfindung wird gelöst durch ein Verfahren zur Überwachung einer Absicherung einer Straßenbaustelle, mit den Schritten:
Absichern der Straßenbaustelle mit zumindest einer Sicherungseinrichtung, wobei die Sicherungseinrichtung ein Navigations-Modul, eine Kamera und eine Datenübertragungseinrichtung zur drahtlosen Datenübertragung aufweist,
Bestimmen von einem Positions-Datensatz indikativ für eine aktuelle Ist-Position der Sicherungseinrichtung mit dem Navigations-Modul,
Übertragen des Positions-Datensatzes zu einer Zentralrechnereinheit,
Erfassen von einem Referenzbild-Datensatz mit der Kamera indikativ für einen initialen Zustand der Absicherung,
Übertragen des Referenzbild-Datensatzes zu der Zentralrechnereinheit,
Erfassen eines Kontrollbild-Datensatzes indikativ für einen aktuellen Zustand der Absicherung,
Übertragen des Kontrollbild-Datensatzes zu der Zentralrechnereinheit,
Bestimmen eines Korrektur-Datensatzes zur Korrektur des Positions-Datensatzes durch Auswerten zumindest des Referenzbild-Datensatzes und des Kontrollbild-Datensatzes,
Korrigieren des Positions-Datensatzes mit dem Korrektur-Datensatz um einen korrigierten Positions-Datensatz zu erzeugen,
Vergleichen einer Ist-Position gemäß dem korrigierten Positions-Datensatz mit einer vorbestimmten Soll-Position der Sicherungseinrichtung, und
Erzeugen eines Alarmsignals, wenn die Ist-Position von der Soll-Position abweicht.

Somit wird vorgeschlagen, die eine begrenzte Genauigkeit aufweisenden Daten eines satellitengestütztes Navigationssystem, wie z.B. eines GPS- oder Differential GPS-Systems zusätzlich mit Daten zu ergänzen, die durch Auswertung von einem Vergleich von Bilddaten gewonnen wurden, die zum einen repräsentativ für den Zustand der Absicherung zum Zeitpunkt ihrer Inbetriebnahme und repräsentativ für den Zustand der Absicherung zu einem späteren Kontrollzeitpunkt sind. Dabei können selbstverständliche mehrere Kontrollbild-Datensätze erfasst und mit dem Referenzbild-Datensatz verglichen werden, wobei die Kontrollbild-Datensätze innerhalb vorbestimmter Zeitintervalle, z.B. einmal täglich, erfasst werden. So kann die Genauigkeit der Positionserfassung der Sicherungselemente gesteigert werden.

Gemäß einer Ausführungsform werden zum Bestimmen des Korrektur-Datensatzes die folgenden Teilschritte durchgeführt:
Suchen eines optisch markanten Referenzpunktes in dem Referenzbild-Datensatz,
Bestimmen eines Referenzpunktpositions-Datensatzes indikativ für eine Position des optisch markanten Referenzpunktes,
Suchen des optisch markanten Referenzpunktes in den Kontrollbild-Datensatz,
Bestimmen eines Kontrollpunktpositions-Datensatzes indikativ für eine Position des optisch markanten Referenzpunkt in dem Kontrollbild-Datensatz, und
Bestimmen des Korrektur-Datensatzes durch Vergleichen des Referenzpunktpositions-Datensatzes mit dem Kontrollpunktpositions-Datensatz.

Es werden also der Referenzbild-Datensatz und der Kontrollbild-Datensatz nach einem Referenzpunkt durchsucht. Der optisch markante Referenzpunkt ist aufgrund seiner Form bzw. Gestalt einfach optisch mittels Verfahren zur Bildverarbeitung zu identifizieren. Es kann sich bei dem Referenzpunkt um eine andere Sicherungseinrichtung handeln. Mit anderen Worten, es werden keine Absolutwerte, sondern vorbestimmte Abstände zwischen Sicherungseinrichtungen erfasst und ausgewertet um hier Abweichungen zu erfassen.

Ferner kann sich bei dem Referenzpunkt auch z.B. um eine Straßenkreuzung oder Straßeneinmündung, aber auch um besondere Gebäude handeln, deren exakte Position bekannt ist und daher als Grundlage für den exakten Positions-Datensatz dient. Der Korrektur-Datensatz gibt dann den fehlerhaften Versatz an, der durch die Ungenauigkeit des Navigationssystems entsteht. So kann besonders einfach und zuverlässig die Genauigkeit der Positionserfassung der Sicherungselemente gesteigert werden.

Gemäß einer weiteren Ausführungsform wird zum Suchen des optisch markanten Referenzpunktes in dem Referenzbild-Datensatz und/oder zum Suchen des optisch markanten Referenzpunktes in dem Kontrollbild-Datensatz ein trainiertes künstliches neuronales Netz verwendet. Ein derartiges künstliches neuronales Netz wird vor seiner Inbetriebnahme während einer Trainingsphase trainiert. Während der Trainingsphase wird das künstliche neuronale Netz modifiziert, so dass es für bestimmte Eingangsmuster zugehörige Ausgabemuster erzeugt. Dies kann mittels überwachtem Lernen, unüberwachtem Lernen, bestärkendem Lernen oder stochastischem Lernen erfolgen. Dabei besitzt ein trainiertes künstliches neuronales Netz den Vorteil, dass es von seiner Lernfähigkeit, seiner Parallelität, seiner Fehlertoleranz und seiner Robustheit gegenüber Störungen profitiert.

Gemäß einer weiteren Ausführungsform wird der Referenzbild-Datensatz mit dem Kontrollbild-Datensatz verglichen um Beschädigungen der Absicherung zu erfassen. Es wird ein weiteres Alarmsignal erzeugt, wenn Beschädigungen erfasst wurden. Beschädigungen können z.B. Folgen von Unwettern sein, die beispielsweise zur Folge haben, dass sich eine Sicherungseinrichtung zwar im Wesentlichen an ihrer Soll-Position befindet, aber eine andere Sicherungseinrichtung beispielsweise umgefallen ist. Weitere Beschädigungen können sein, dass eine Sicherungseinrichtung verschwunden, beschädigt oder nicht mehr funktionsfähig ist, da ihre Beleuchtung defekt ist. Eine derartige, umgefallene Sicherungseinrichtung kann durch Auswerten des Kontrollbild-Datensatzes, d.h. durch einen Vergleich mit dem Referenzbild-Datensatz erfasst werden. So wird eine weitere, zusätzliche Möglichkeit der Kontrolle einer Absicherung einer Straßenbaustelle geschaffen, die eine persönliche Kontrolle der Absicherung der Straßenbaustelle durch eine Person vor Ort ergänzen oder ersetzen kann. Gemäß einer weiteren Ausführungsform wird zum Erfassen von Beschädigungen der Absicherung ein weiteres trainiertes künstliches neuronales Netz verwendet. So kann auch bei der Erfassung derartiger Beschädigungen von den genannten Vorteilen künstlicher neuronaler Netze profitiert werden.

Ferner gehören zur Erfindung ein Computerprogrammprodukt und ein System zur Überwachung einer Absicherung einer Straßenbaustelle.

Es wird nun die Erfindung anhand der Figuren erläutert. Es zeigen:
Figur 1 in schematischer Darstellung eine Absicherung einer Straßenbaustelle.
Figur 2 in schematischer Darstellung weitere Details einer der in Figur 1 gezeigten Sicherungseinrichtung mit einer Zentralrechnereinheit.
Figur 3 in schematischer Darstellung eine alternative Ausführungsform einer Sicherungseinrichtung.
Figur 4 in schematischer Darstellung eine weitere, alternativen Ausführungsform einer Sicherungseinrichtung.
Figur 5 in schematischer Darstellung eine weitere, alternative Ausführungsform einer Sicherungseinrichtung.
Figur 6 in schematischer Darstellung weitere Details der in Figur 2 gezeigten Zentralrechnereinheit.
Figur 7 in schematischer Darstellung weitere Details der in Figur 2 gezeigten Zentralrechnereinheit.
Figur 8 in schematischer Darstellung weitere Details der in Figur 2 gezeigten Zentralrechnereinheit.
Figur 9 in schematischer Darstellung einen Verfahrensablauf.
Figur 10 in schematischer Darstellung weitere Details des in Figur 9 gezeigten Verfahrensablaufs.

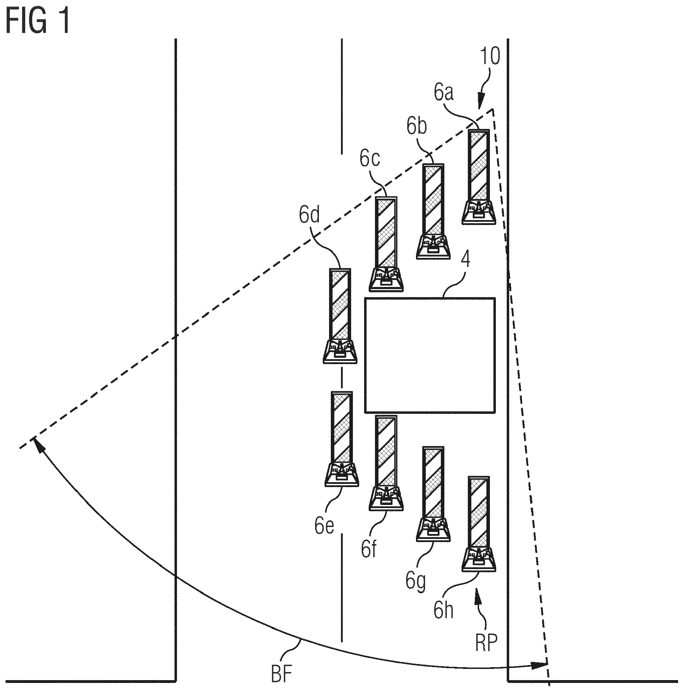

Es wird zunächst auf Figur 1 Bezug genommen.

Dargestellt ist eine Straße mit zwei Fahrspuren, wobei eine eingerichtete Straßenbaustelle 4 zu einer Sperrung einer der beiden Fahrbahnen führt.

Dabei wird unter einer Straßenbaustelle 4 ein Ort verstanden, an dem ein Straßenkörper und/oder sonstige Infrastrukturelemente errichtet, geändert, instandgehalten oder abgebrochen wird.

Im vorliegenden Szenario beginnt bzw. endet die zwei Fahrspuren aufweisende Straße in einer Querstraße.

Um die Straßenbaustelle 4 abzusichern, z.B. um auf der Baustelle 4 tätige Personen zu schützen, ist im vorliegenden Ausführungsbeispiel eine Absicherung gebildet worden, die gemäß einer verkehrsrechtlichen Anordnung aus acht Sicherungseinrichtungen 6a, 6b, 6c, 6d, 6e, 6f, 6g, 6h besteht, die derart um die Baustelle 4 angeordnet sind, dass der Verkehr mit einem ausreichenden Sicherheitsabstand um die Baustelle 4 herum geführt wird.

Angemerkt sei an dieser Stelle, dass zumindest die Sicherungseinrichtung 6a eine Kamera 10 aufweist und die weitere Sicherungseinrichtung 6h sich im Blickfeld BF der Kamera 10 befindet und als Referenzpunkt RP dient, wie dies später detailliert erläutert wird.

Zusätzlich kann auch die Einmündungsstelle, an der die zwei Fahrspuren aufweisende Straße beginnt bzw. endet in analoger Weise als Referenzpunkt RP verwendet werden kann. Als ortsfester Punkt kann auch z.B. eine Bordsteinkante, z.B. in diesem Bereich dienen.

Des Weiteren kann auch ein ortfester Punkt, dessen Koordinaten bekannt sind, als Referenzpunkt RP dienen, wie z.B. der Mittelstreifen der Straße. Damit ist z.B. auch eine genaue Position der in Figur 1 gezeigten Sicherungseinrichtungen 6d und 6e bekannt.

Im vorliegenden Ausführungsbeispiel sind die Sicherungseinrichtungen 6 jeweils als Baustellenleitbake ausgebildet.

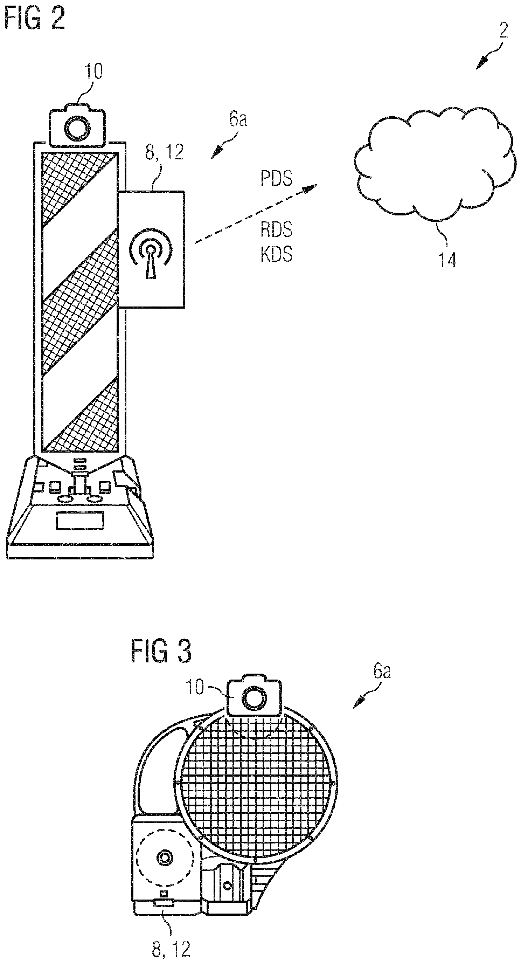

Es wird nun zusätzlich auf Figur 2 Bezug genommen.

Um eine automatisierte Kontrolle der Absicherung der Straßenbaustelle 4 durchzuführen ist ein System 2, zumindest umfassend die Sicherungseinrichtung 6a und eine Zentralrechnereinheit 14, vorgesehen.

Die Sicherungseinrichtung 6a weist als zusätzliche Komponenten zu den an sich bekannten Komponenten einer Baustellenleitbake ein Navigations-Modul 8, die Kamera 10 und eine Datenübertragungseinrichtung 12 auf.

Das Navigations-Modul 8 ist dazu ausgebildet, eine aktuelle Ist-Position der Sicherungseinrichtung 6a zu bestimmen und diese in vorbestimmten zeitlichen Intervallen in Form eines Positions-Datensatzes PDS bereitzustellen. Der Positions-Datensatz PDS kann z.B. geographische Koordinaten repräsentativ für die aktuelle Ist-Position der Sicherungseinrichtung 6 aufweisen.

Das Navigations-Modul 8 kann ein satellitengestütztes Navigationssystem, wie z.B. das GPS-, ein Differential GPS- (DGPS) oder GALILEO-System sein.

Die Kamera 10 ist dazu ausgebildet, Bilddaten einer Umgebung der aktuellen Ist-Position der Sicherungseinrichtung 6a zu erfassen und diese in ebenfalls vorbestimmten zeitlichen Intervallen in Form eines Referenzbild-Datensatz RDS und einen Kontrollbild-Datensatz KDS bereitzustellen. Die Kamera 10 kann z.B. eine CCD-Kamera sein. Der Referenzbild-Datensatz RDS kann indikativ für einen initialen Zustand der Absicherung zum Zeitpunkt ihrer Inbetriebnahme bzw. Abnahme sein, während der Kontrollbild-Datensatz KDS indikativ für einen aktuellen Zustand der Absicherung zum Zeitpunkt ihrer späteren Überprüfung ist, jeweils gemäß dem Blickfeld BF (siehe Figur 1) der Kamera 10.

Sowohl der Positions-Datensatz PDS als auch der Referenzbild-Datensatz BDS wie auch später der Kontrollbild-Datensatz KDS werden im Betrieb von der Datenübertragungseinrichtung 12 eingelesen und dann drahtlos zu einer Zentralrechnereinheit 14 drahtlos übertragen, um dort - wie dies später erläutert wird - ausgewertet zu werden. Die Datenübertragungseinrichtung 12 kann zur Datenübertragung gemäß einem Mobilfunkstandard ausgebildet sein, wie z.B. gemäß 5G.

Dabei können der Positions-Datensatz PDS wie auch der Referenzbild-Datensatz RDS und der Kontrollbild-Datensatz KDS jeweils mit einem Zeitstempel versehen werden, bevor sie getrennt zu der Zentralrechnereinheit 14 übertragen werden. Es kann auch vorgesehen sein, dass der Positions-Datensatz PDS und der Bild-Datensatz BDS zu einem einzigen Datensatz zusammengefasst und dann mit einem Zeitstempel versehen werden, bevor er zu der Zentralrechnereinheit 14 übertragen wird.

Ferner sei angemerkt, dass mehr als eine der in Figur 1 gezeigten Sicherungseinrichtungen 6a in der unter Bezugnahme auf Figur 2 beschriebenen Form ausgebildet sein kann. Mit anderen Worten es können mindestens zwei, weitere, oder alle Sicherungseinrichtungen 6a, 6b, 6c, 6d, 6e, 6f, 6g, 6h derart ausgebildet sein.

Es wird nun zusätzlich auf die Figuren 3 bis 5 Bezug genommen.

Die Figur 3 zeigt eine als Baustellenwarnleuchte ausgebildete Sicherungseinrichtung 6a, die als zusätzliche Komponenten ebenfalls ein Navigations-Modul 8, eine Kamera 10 und eine Datenübertragungseinrichtung 12 aufweist.

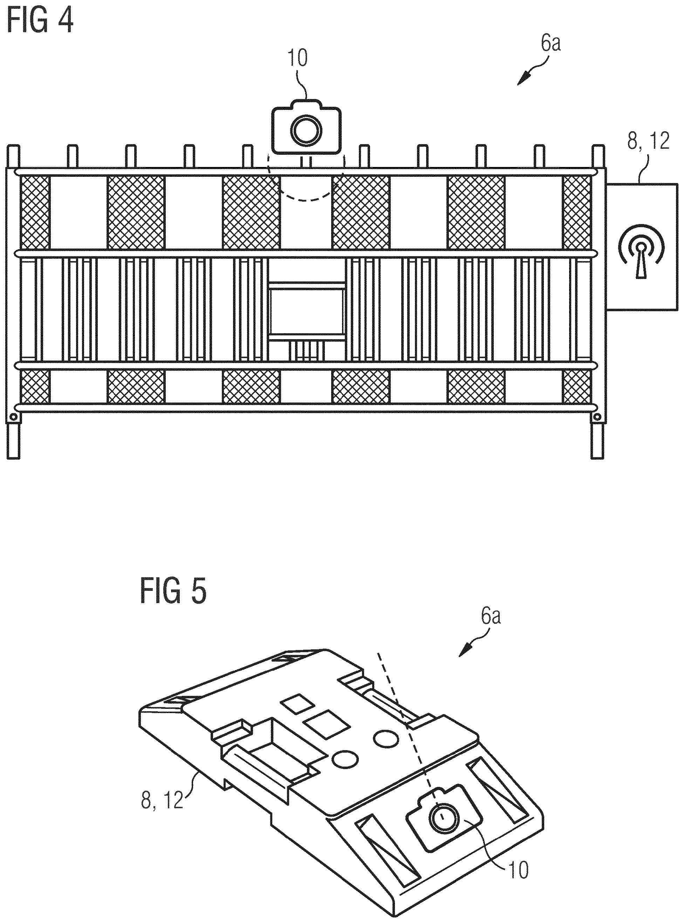

Die Figur 4 hingegen zeigt eine als Absperrtafel ausgebildete Sicherungseinrichtung 6a, die ebenfalls als zusätzliche Komponenten ein Navigations-Modul 8, eine Kamera 10 und eine Datenübertragungseinrichtung 12 aufweist.

Schließlich zeigt die Figur 5 eine als Fußplatte für eine Baustellenbake ausgebildete Sicherungseinrichtung 6a, die ebenfalls als zusätzliche Komponenten ein Navigations-Modul 8, eine Kamera 10 und eine Datenübertragungseinrichtung 12 aufweist.

Zweckmäßigerweise wird die Sicherungseinrichtung 6a derart angeordnet bzw. die Kamera 10 derart ausgerichtet, dass im Blickfeld BF (siehe Figur 1) der Kamera 10 zumindest der Referenzpunkt RP liegt. Ferner kann die Sicherungseinrichtung 6a zusätzlich - wenn möglich - derart ausgerichtet werden, dass die Baustelle 4 und/oder andere Sicherungseinrichtungen 6b, 6c, 6d, 6e, 6f, 6g, 6h im Blickfeld der Kamera 10 liegen.

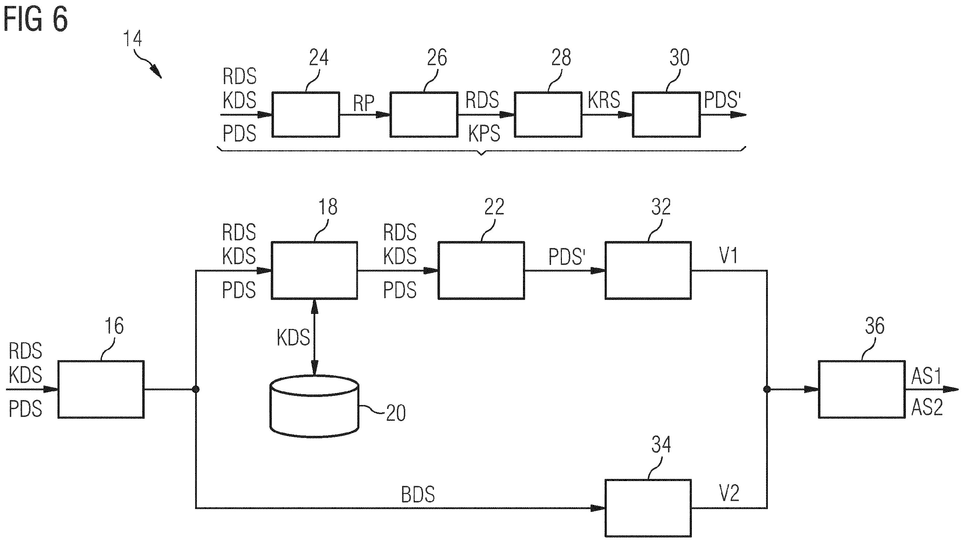

Es werden nun unter zusätzlicher Bezugnahme auf die Figur 6 weitere Details der Zentralrechnereinheit 14 erläutert.

Die Zentralrechnereinheit 14 ist im vorliegenden Ausführungsbeispiel als Cloud-Rechner ausgebildet. Abweichend vom vorliegenden Ausführungsbeispiel kann die Zentralrechnereinheit 14 aber auch eine andere Rechnerkonfiguration, wie einen Einzelrechner oder ein anderes Rechnernetz, aufweisen.

Im vorliegenden Ausführungsbeispiel weist die Zentralrechnereinheit 14 ein Empfangs-Modul 16, ein Auswahl-Modul 18, einen Speicher 20, ein Korrektur-Modul 22, ein Auswerte-Modul 32, ein Schadenserfassungs-Modul 34 und ein Alarm-Modul 36 auf. Diese Komponenten können für ihre nachfolgend beschriebenen Aufgaben und/oder Funktionen Hard- und/oder Software-Komponenten aufweisen.

Das Korrektur-Modul 22 weist im vorliegenden Ausführungsbeispiel ein Such-Modul 24, ein Referenzpunkt-Modul 26, ein Vergleichs-Modul 28 und ein Anpassungs-Modul 30 auf.

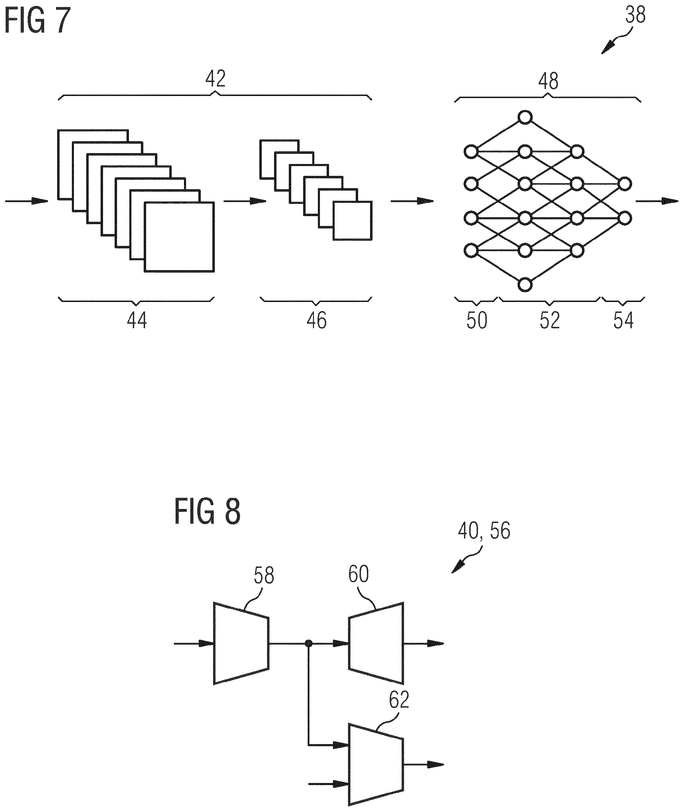

Dabei weist ferner im vorliegenden Ausführungsbeispiel das Such-Modul 24 ein trainiertes künstliches neuronales Netz 38 auf (siehe Figur 7). Des Weiteren weist im vorliegenden Ausführungsbeispiel das Schadenserfassungs-Modul 34 ein weiteres trainiertes künstliches neuronales Netz 40 auf (siehe Figur 8).

Das Empfangs-Modul 16 ist zum Empfang des Positions-Datensatzes PDS und des Referenzbild-Datensatzes BDS sowie der Kontrollbild-Datensatz KDS ausgebildet.

Das Auswahl-Modul 18 ist dazu ausbildet, bei den bei der Inbetriebnahme der Absicherung erfassten Referenzbild-Datensatz RDS in dem Speicher 20 zwischen zu speichern und aus dem Speicher 20 einzulesen, wenn ein Kontrollbild-Datensatz KDS vorliegt.

Zusätzlich oder alternativ kann ein Karten-Modul (nicht dargestellt) zum Bestimmen eines Karten-Datensatzes indikativ für die Umgebung der aktuellen Ist-Position der Sicherungseinrichtung 6a durch Auswerten des Positions-Datensatzes PDS vorgesehen sein. Das Karten-Modul liest hierzu den im dem Speicher 20 archivierten Karten-Datensatz ein.

Der Karten-Datensatz, z.B. gemäß dem NDS-Standard (NDS - navigation data standard) oder einem anderen GPS-Standard, weist zumindest einen exakten Positions-Datensatz indikativ für den optisch markanten Referenzpunkt RP in der Umgebung der aktuellen Ist-Position der Sicherungseinrichtung 6a, wie z.B. einer Bordsteinkante im Bereich der Straßeneinmündung und/oder eines Mittelstreifens der Straße auf. Der exakte Positions-Datensatz kann z.B. geographische Koordinaten indikativ für den optisch markanten Referenzpunkt RP aufweisen.

Der optisch markante Referenzpunkt RP ist aufgrund seiner Form bzw. Gestalt einfach optisch zu identifizieren. Im vorliegenden Ausführungsbeispiel handelt es sich bei dem Referenzpunkt RP um eine andere Sicherungseinrichtung 6 der Absicherung. Abweichend vom vorliegenden Ausführungsbeispiel kann es sich bei dem Referenzpunkt RP auch um Straßenkreuzungen oder Straßeneinmündungen, oder auch um besondere Gebäude mit einer charakterlichen Silhouette handeln, deren exakte Position bekannt ist.

Das Korrektur-Modul 22 ist zum Bestimmen eines Korrektur-Datensatzes KRS zur Korrektur des Positions-Datensatzes PDS durch Auswerten zumindest des Referenzbild-Datensatzes RDS und des Kontrollbild-Datensatzes KDS ausgebildet. Der Korrektur-Datensatz KRS kann als ein Verschiebevektor aufgefasst bzw. derart ausgebildet sein.

Dabei weist im vorliegenden Ausführungsbeispiel das Korrektur-Modul 22 das Such-Modul 24 zum automatischen Suchen des optisch markanten Referenzpunktes RP in dem Referenzbild-Datensatz RDS und in dem Kontrollbild-Datensatz KDS, das Referenzpunkt-Modul 26 zum Bestimmen des Referenzpunktpositions-Datensatz RDS indikativ für eine Position des optisch markanten Referenzpunkt RP und zum Bestimmen eines Kontrollpunktpositions-Datensatzes KPS indikativ für die Position des optisch markanten Referenzpunkt RP in dem Kontrollbild-Datensatz KDS, und das Vergleichs-Modul 28 zum Vergleichen des Referenzpunktpositions-Datensatzes RDS mit dem Kontrollpunktpositions-Datensatzes KPS zum Bestimmen des Korrektur-Datensatzes KRS sowie das Anpassungs-Modul 30 zum Korrigieren des Positions-Datensatzes PDS mit dem Korrektur-Datensatzes KRS auf. Der Referenzpunktpositions-Datensatz RDS wie auch der Kontrollpunktpositions-Datensatz KPS können z.B. geographische Koordinaten indikativ für die Position des jeweiligen erfassten Referenzpunktes RP aufweisen.

Im vorliegenden Ausführungsbeispiel weist das Such-Modul 24 und das Referenzpunkt-Modul 26 jeweils eine Doppelfunktion auf, nämlich zum einen Referenzpunkt RP in den jeweiligen Bilddaten zu suchen, und zum anderen den Referenzpunktpositions-Datensatz RDS und den Kontrollpunktpositions-Datensatz KPS bestimmen. Abweichend vom vorliegenden Ausführungsbeispiel können auch zwei Such-Module 24 und/oder zwei Referenzpunkt-Modul 26 vorgesehen sein.

Dabei kann das Such-Modul 24 hierfür das trainierte künstliche neuronales Netz 38 aufweisen.

Künstliche neuronale Netze, auch künstliche neuronale Netzwerke, kurz: KNN (englisch: ANN - artificial neural network), sind Netze aus künstlichen Neuronen. Diese Neuronen (auch Knotenpunkte) eines künstlichen neuronalen Netzes sind in Schichten angeordnet und in der Regel in einer festen Hierarchie miteinander verbunden. Die Neuronen sind dabei zumeist zwischen zwei Schichten verbunden, in selteneren Fällen aber auch innerhalb einer Schicht.

Ein derartiges künstliches neuronales Netz 38 wird vor seiner Inbetriebnahme während einer Trainingsphase trainiert. Während der Trainingsphase wird das künstliche neuronale Netz modifiziert, so dass es für bestimmte Eingangsmuster zugehörige Ausgabemuster erzeugt. Dies kann mittels überwachtem Lernen, unüberwachtem Lernen, bestärkendem Lernen oder stochastischem Lernen erfolgen.

Dabei bietet die Verwendung eines trainierten künstlichen neuronalen Netzes den Vorteil, dass es von seiner Lernfähigkeit, seiner Parallelität, seiner Fehlertoleranz und seiner Robustheit gegenüber Störungen profitiert.

Weitere Details des künstlichen neuronalen Netzes 38 werden später noch detaillierter erläutert.

Das Auswerte-Modul 32 ist dazu ausgebildet, eine Ist-Position gemäß dem korrigierten Positions-Datensatz PDS' mit einer vorbestimmten Soll-Position der Sicherungseinrichtung 6 gemäß der verkehrsrechtlichen Anordnung zu vergleichen. Wenn die Ist-Position mit der Soll-Position übereinstimmt weist im vorliegenden Ausführungsbeispiel das Auswerte-Modul 32 einer logischen Variablen V1 den Wert logisch eins zu, andernfalls den Wert logisch null.

Das Schadenserfassungs-Modul 34 ist dazu ausgebildet, den Kontrollbild-Datensatz KDS auszuwerten, um Beschädigungen der Absicherung zu erfassen. Beschädigungen können z.B. Folgen von Unwettern sein, die zur Folge haben, dass z.B. eine der Sicherungseinrichtung 6 sich zwar im Wesentlichen an ihrer Soll-Position (d.h. innerhalb von Untergrenzen, mit denen die Ist-Position erfasst werden kann) befindet, aber eine andere Sicherungseinrichtung 6 umgefallen ist. Weitere Beschädigungen können sein, dass eine Sicherungseinrichtung 6 aus dem Bereich der Baustelle 4 verschwunden, beschädigt oder nicht mehr funktionsfähig ist, da z.B. ihre Beleuchtung defekt ist. Eine derartige, umgefallene Sicherungseinrichtung 6 kann durch Auswerten des Kontrollbild-Datensatzes KDS erfasst werden. In diesem Fall weist das Schadenserfassungs-Modul 34 einer weiteren logischen Variablen V2 den Wert logisch eins zu, andernfalls den Wert logisch null.

Dabei kann das Schadenserfassungs-Modul 34 hierfür ein weiteres trainiertes künstliches Netz 40 aufweisen. Das weitere neuronale Netz 40 des Schadenserfassungs-Moduls 34 kann die gleiche Architektur wie das neuronale Netz 38 des Such-Moduls 24 aufweisen.

Abweichend hiervon kann das weitere künstliche neuronale Netz 40 auch einen Autoencoder aufweisen.

Unter einem Autoencoder wird dabei eine Einrichtung bzw. ein Algorithmus verstanden, der eine Abbildung einer ursprünglichen Eingabe bereitstellt. Es wird also ein Autoencoder mit einem Encoder und einem Decoder zuerst während einer Trainingsphase darauf trainiert, Trainingsdaten auf Referenzdaten abzubilden, mit anderen Worten Kopien der Trainingsdaten als Referenzdaten bereitzustellen. Während des Trainings wird dabei die Fähigkeit des Autoencoders ausgenutzt, Unterschiede zwischen den Trainingsdaten und den Referenzdaten zu erfassen um Lernfortschritte zu erzielen.

Die gleiche Fähigkeit, Unterschiede zwischen den Trainingsdaten und den Referenzdaten zu erfassen, wird nach Abschluss der Trainingsphase in einem Normalbetrieb genutzt um Abweichungen zwischen aktuellen Daten und Referenzdaten zu erfassen.

Weitere Details einer weiteren Ausführungsform des Weiteren künstlichen neuronalen Netzes 40 mit einem Autoencoder werden später noch detailliert erläutert.

Das Alarm-Modul 36 ist dazu ausgebildet, ein Alarmsignal AS1 zu erzeugen, wenn die Ist-Position von der Soll-Position abweicht. Ferner ist das Alarm-Modul 36 dazu ausgebildet, ein weiteres Alarmsignal AS2 zu erzeugen, wenn eine Beschädigung vorliegt.

Es werden nun unter zusätzlicher Bezugnahme auf Figur 7 weitere Details des künstlichen neuronalen Netzes 38 gemäß dem vorliegenden Ausführungsbeispiel erläutert.

Das künstliche neuronale Netz 38 kann eingangsseitig ein faltendes neuronales Netz 42 (englisch: CNN - convolutional neuronal network) zur Klassifizierung mit einem oder mehreren convolutional layer 44 und von einem pooling layer 46 aufweisen. Auf das faltende neuronale Netz kann ein weiteres, künstliches, mehrschichtiges bzw. tiefes neuronales Netz 48 folgen, mit einer Eingangsschicht 50, mehreren Zwischenschichten 52 und einer Ausgangsschicht 54. Das mehrschichtige neuronale Netz kann ein rekurrentes neuronales Netz (englisch: RNN - recurrent neural network) sein.

Als rekurrente neuronale Netze (RNN - recurrent neural network) werden künstliche neuronale Netze bezeichnet, die sich im Gegensatz zu Vorwärts-Netzen (englisch: feedforward neuronal network) durch Verbindungen von Neuronen einer Schicht zu Neuronen derselben oder einer vorangegangenen Schicht auszeichnen.

Das künstliche neuronale Netz 38 wird vor seiner Inbetriebnahme während einer Trainingsphase mit Trainings-Datensätzen beaufschlagt. Z.B. mittels dem Verfahren der Fehlerrückführung (englisch: backpropagation oder auch backpropagation of error) erfolgt ein Einlernen des künstlichen neuronalen Netzes 38 durch Änderung von Gewichtsfaktoren der künstlichen Neuronen des künstlichen neuronalen Netzes 38 um eine möglichst zuverlässige Abbildung von gegebenen Eingabevektoren auf gegebene Ausgabevektoren zu erreichen. Ferner kann das künstliche neuronale Netz 38, insbesondere das mehrschichtige neuronale Netz, ein langes Kurzzeitgedächtnis (englisch: LSTM - long short-term memory) aufweisen, um die Trainingsergebnisse zu verbessern. Das Trainieren kann mittels überwachtem, unüberwachtem oder bestärkendem Lernen erfolgen.

Es werden nun unter zusätzlicher Bezugnahme auf Figur 8 weitere Details des Weiteren künstlichen neuronalen Netzes 40 mit einem Autoencoder 56 erläutert.

Gemäß diesem Ausführungsbeispiel wird als Autoencoder 56 ein Generative Adversarial Autoencoder verwendet. Ein derartiger Autoencoder kann auch als probalististic Autoencoder aufgefasst werden. Der Autoencoder weist ein generatives neuronales Netz auf (englisch: GAN - generative neural network), mit einem ersten und einem zweiten künstlichen neuronalen Netz sowie einem Encoder 58. Das erste künstliche neuronale Netz ist dabei als Generator 60 und das zweite künstliche neuronale Netz ist als Diskriminator 62 ausgebildet. Während einer Trainingsphase führen der Generator 60 und der Diskriminator 62 ein Nullsummenspiel durch. Hierbei erzeugt der Generator 60 Referenzdaten, z.B. basierend auf Zufallswerten, während der Diskriminator 62 die Referenzdaten bewertet. Hierzu führt der Diskriminator 62 einen Vergleich der Referenzdaten mit echten Datensätzen durch. Das generative neuronale Netz dient dabei dazu, den Diskriminator 62 upzudaten. Dabei erlaubt der Diskriminator 62 eine besonders zuverlässige Erfassung von derartigen Abweichungen im Unterschied zu z.B. künstlichen neuronalen Netzen, wie z.B. mehrschichtige neuronale Netze.

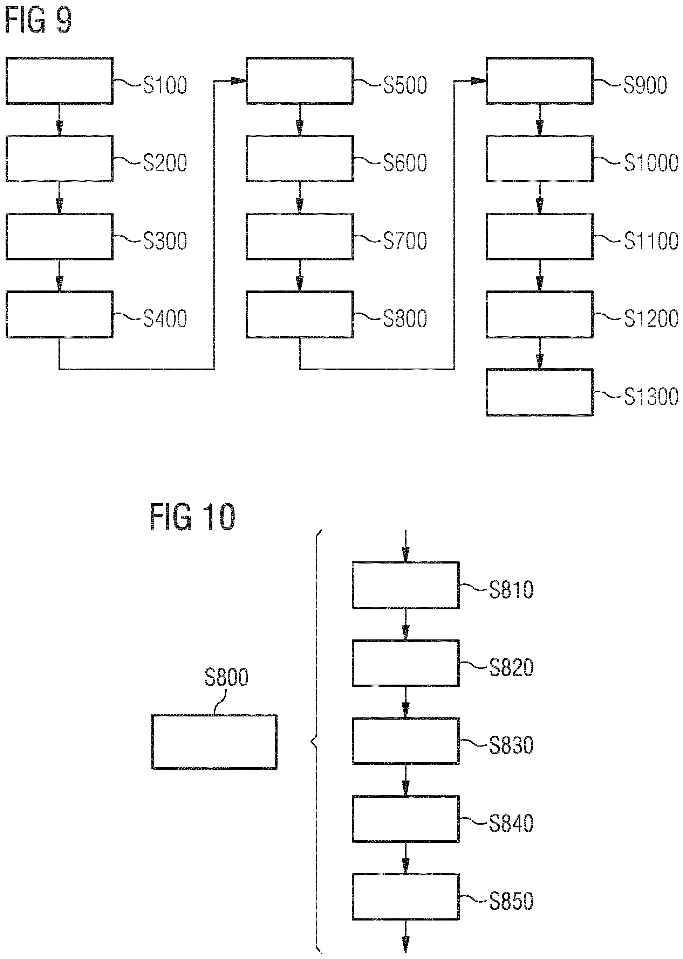

Es wird nun unter zusätzlicher Bezugnahme auf die Figuren 9 und 10 ein Verfahrensablauf zum Betrieb des Systems 2 erläutert.

In einem ersten Schritt S100 wird die Straßenbaustelle 4 mit den Sicherungseinrichtungen 6 gemäß der verkehrsrechtlichen Anordnung abgesichert.

In einem weiteren Schritt S200 wird von dem Navigations-Modul 8 der Positions-Datensatz PDS indikativ für die aktuelle Ist-Position der Sicherungseinrichtung 6a bestimmt.

In einem weiteren Schritt S300 wird der Positions-Datensatz PDS mittels der Datenübertragungseinrichtung 12 drahtlos zu der Zentralrechnereinheit 14 übertragen und dort von dem Empfangs-Modul 16 empfangen.

In einem weiteren Schritt S400 wird mit der Kamera 10 der Referenzbild-Datensatz RDS indikativ für einen initialen Zustand der Absicherung im Blickfeld BF erfasst.

In einem weiteren Schritt S500 wird ebenfalls mittels der Datenübertragungseinrichtung 12 der Referenzbild-Datensatz RDS drahtlos zu der Zentralrechnereinheit 14 übertragen und dort ebenfalls von dem Empfangs-Modul 16 empfangen sowie in dem Speicher 20 zwischengespeichert.

In einem weiteren Schritt S600 Auswahl-Modul wird der Kontrollbild-Datensatz KDS indikativ für einen aktuellen Zustand der Absicherung mit der Kamera 10 erfasst.

In einem weiteren Schritt S700 wird mittels der Datenübertragungseinrichtung 12 der Kontrollbild-Datensatz KDS drahtlos zu der Zentralrechnereinheit 14 übertragen und dort ebenfalls von dem Empfangs-Modul 16 empfangen.

In einem weiteren Schritt S800 wertet das Korrektur-Modul 22 den in dem Speicher 20 zwischengespeicherten Referenzbild-Datensatz RDS und den Kontrollbild-Datensatzes KDS aus um den Korrektur-Datensatz KRS zur Korrektur des Positions-Datensatzes PDS zu bestimmen.

Hierzu wird in einem Unterschritt S810 von einem Such-Modul 24 mit dem weiteren künstlichen neuronalen Netz 38 der Referenzbild-Datensatz RDS nach dem optisch markanten Referenzpunkt RP durchsucht.

Wenn der Referenzpunkt RP gefunden wurde, bestimmt in einem weiteren Unterschritt S820 das Referenzpunkt-Modul 26 den Referenzpunktpositions-Datensatz RDS indikativ für die Position des optisch markanten Referenzpunktes RP.

In einem weiteren Unterschritt S830 durchsucht das Such-Modul 24 den Kontrollbild-Datensatz KDS nach dem optisch markanten Referenzpunkte RP.

In einem weiteren Unterschritt S840 bestimmt das Referenzpunkt-Modul 26 auch den Kontrollpunktpositions-Datensatz KPS indikativ für eine Position des optisch markanten Referenzpunkt RP in dem Kontrollbild-Datensatz KDS, und

In einem weiteren Unterschritt S850 vergleicht das Vergleichs-Modul 28 den Referenzpunktpositions-Datensatz RDS mit dem Kontrollpunktpositions-Datensatz KPS um den Korrektur-Datensatz KRS zu bestimmen.

In einem weiteren Schritt S900 korrigiert dann das Anpassungs-Modul 30 den Positions-Datensatz PDS mit dem Korrektur-Datensatz KRS um den korrigierten Positions-Datensatz PDS' zu bestimmen.

In einem weiteren Schritt S1000 vergleicht das Auswerte-Modul 32 die Ist-Position gemäß dem korrigierten Positions-Datensatz PDS' mit der vorbestimmten Soll-Position der Sicherungseinrichtung 6 gemäß der verkehrsrechtlichen Anordnung.

Wenn die Ist-Position nicht mit der Soll-Position übereinstimmt, erzeugt das Alarm-Modul 36 das Alarm-Signal AS1.

In einem weiteren Schritt S1200 vergleicht das Schadenserfassungs-Modul 34 mit dem weiteren künstlichen neuronalen Netz 40 den Referenzbild-Datensatz RDS mit dem Kontrollbild-Datensatz KDS um Beschädigungen der Absicherung zu erfassen. Hierzu kann vorgesehen sein, dass sowohl in dem Referenzbild-Datensatz RDS wie auch im Kontrollbild-Datensatz wie oben beschrieben nach dem Referenzpunkt RP gesucht wird um Abweichungen zu bestimmen, die als indikativ für eine Beschädigung der Absicherung angesehen werden.

Wenn derartige Beschädigungen erfasst wurden, erzeugt in einem weiteren Schritt S1300 das Alarm-Modul 36 das weitere Alarmsignal AS2.

Auf das Vorliegen des Alarm-Signals AS1 und/oder des weiteren Alarm-Signals AS2 hin kann eine persönliche Kontrolle der Absicherung der Straßenbaustelle 4 von einer Person vor Ort ausgelöst werden. Dies kann auch eine vorherige Sichtung der Bild-Datensätze BDS durch die Person umfassen, bevor sie sich zur persönlichen Kontrolle zu der Baustelle 4 begibt, um die Beschädigungen zu verifizieren und gegebenenfalls zu beseitigen.

Zusätzlich oder alternativ kann auch vorgesehen sein, dass ein Karten-Modul den Positions-Datensatz PDS auswertet wird um einen im dem Speicher 20 archivierten Karten-Datensatz indikativ für die Umgebung der aktuellen Ist-Position der Sicherungseinrichtung 6 zu bestimmen, wobei der Karten-Datensatz zumindest einen exakten Positions-Datensatz indikativ für den optisch markanten Referenzpunkt RP in der Umgebung der aktuellen Ist-Position der Sicherungseinrichtung 6a aufweist.

Abweichend vom vorliegenden Ausführungsbeispiel kann die Reihenfolge der Schritte auch eine andere sein. Ferner können mehrere Schritte auch zeitgleich bzw. simultan ausgeführt werden. Des Weiteren können auch abweichend vom vorliegenden Ausführungsbeispiel einzelne Schritte übersprungen oder ausgelassen werden. So können z.B. die Schritte S600 bis S1100 einschließlich der Unterschritte S810 bis S850 und die Schritte S1200 sowie S1300 in einer anderen Reihenfolge oder zeitgleich ausgeführt werden. Gleiches gilt z.B. analog für die Schritte S200 und S300 sowie die Schritte S400 und S500.Des Weiteren können z.B. nur die Schritte S100 bis S1100 einschließlich der Unterschritte S810 bis S850 oder nur die Schritte S100 und S400 bis S700 sowie S1200 und S1300 ausgeführt werden.

Mit dem Verfahren kann die Genauigkeit der Positionserfassung der Sicherungselemente 6a, 6b, 6c, 6d, 6e, 6f, 6g, 6h gesteigert werden, in dem zusätzlich Kontrollbild-Datensätze KDS der Umgebung der Sicherungseinrichtung 6 durch einen Abgleich mit dem Referenzbild-Datensatz RDS ausgewertet werden. Ferner können durch die Auswertung der Kontrollbild-Datensätze KDS Beschädigungen der Absicherung der Baustelle 4 erfasst werden.

Offenbart sind zudem die folgenden Ziffern:
1. Verfahren zur Überwachung einer Absicherung einer Straßenbaustelle (4), mit den Schritten:
   (S100) Absichern der Straßenbaustelle (4) mit zumindest einer Sicherungseinrichtung (6a, 6b, 6c, 6d, 6e, 6f, 6g, 6h), wobei die Sicherungseinrichtung (6a, 6b, 6c, 6d, 6e, 6f, 6g, 6h) ein Navigations-Modul (8), eine Kamera (10) und eine Datenübertragungseinrichtung (12) zur drahtlosen Datenübertragung aufweist,
   (S200) Bestimmen von einem Positions-Datensatz (PDS) indikativ für eine aktuelle Ist-Position der Sicherungseinrichtung (6a, 6b, 6c, 6d, 6e, 6f, 6g, 6h) mit dem Navigations-Modul (8),
   (S300) Übertragen des Positions-Datensatzes (PDS) zu einer Zentralrechnereinheit (14),
   (S400) Erfassen von einem Referenzbild-Datensatz (RDS) mit der Kamera (10) indikativ für einen initialen Zustand der Absicherung,
   (S500) Übertragen des Referenzbild-Datensatzes (RDS) zu der Zentralrechnereinheit (14),
   (S600) Erfassen eines Kontrollbild-Datensatzes (KDS) indikativ für einen aktuellen Zustand der Absicherung,
   (S700) Übertragen des Kontrollbild-Datensatzes (KDS) zu der Zentralrechnereinheit (14),
   (S800) Bestimmen eines Korrektur-Datensatzes (KRS) zur Korrektur des Positions-Datensatzes (PDS) durch Auswerten zumindest des Referenzbild-Datensatzes (RDS) und des Kontrollbild-Datensatzes (KDS),
   (S9000) Korrigieren des Positions-Datensatzes (PDS) mit dem Korrektur-Datensatz (KRS) um einen korrigierten Positions-Datensatz (PDS`) zu erzeugen,
   (S10000) Vergleichen einer Ist-Position gemäß dem korrigierten Positions-Datensatz (PDS`) mit einer vorbestimmten Soll-Position der Sicherungseinrichtung (6a, 6b, 6c, 6d, 6e, 6f, 6g, 6h), und
   (S11000) Erzeugen eines Alarmsignals (AS1), wenn die Ist-Position von der Soll-Position abweicht.
2. Verfahren nach Ziffer 1, wobei zum Bestimmen des Korrektur-Datensatzes (KRS) die folgenden Teilschritte durchgeführt werden:
   (S810) Suchen eines optisch markanten Referenzpunktes (RP) in dem Referenzbild-Datensatz (RDS),
   (S820) Bestimmen eines Referenzpunktpositions-Datensatzes (RDS) indikativ für eine Position des optisch markanten Referenzpunkt (RP),
   (S830) Suchen des optisch markanten Referenzpunkte (RP) in dem Kontrollbild-Datensatz (KDS),
   (S840) Bestimmen eines Kontrollpunktpositions-Datensatzes (KPS) indikativ für eine Position des optisch markanten Referenzpunkt (RP) in dem Kontrollbild-Datensatz (KDS), und
   (S850) Bestimmen des Korrektur-Datensatzes (KRS) durch Vergleichen des Referenzpunktpositions-Datensatzes (RDS) mit dem Kontrollpunktpositions-Datensatzes (KPS).
3. Verfahren nach Ziffer 2, wobei zum Suchen des optisch markanten Referenzpunktes (RP) in dem Referenzbild-Datensatz (BDS) im Schritt (S810) und/oder zum Suchen des optisch markanten Referenzpunktes (RP) in dem Kontrollbild-Datensatz (KDS) im Schritt (S830) ein trainiertes künstliches neuronales Netz (16) verwendet wird.
4. Verfahren nach einer der Ziffern 1 bis 3, wobei in einem weiteren Schritt (S12000) der Referenzbild-Datensatz (RDS) mit dem Kontrollbild-Datensatz (KBS) verglichen wird um Beschädigungen der Absicherung zu erfassen, und in einem weiteren Schritt (S13000) ein weiteres Alarmsignal (AS2) erzeugt wird, wenn Beschädigungen erfasst wurden.
5. Verfahren nach Ziffer 4, wobei zum Erfassen von Beschädigungen der Absicherung im Schritt (S1200) ein weiteres trainiertes künstliches neuronales Netz (40) verwendet wird.
6. Computerprogrammprodukt, ausgebildet zum Ausführen eines Verfahrens nach einer der Ziffern 1 bis 5.
7. System (2) zur Überwachung einer Absicherung einer Straßenbaustelle (4), wobei die Straßenbaustelle (4) mit zumindest einer Sicherungseinrichtung (6a, 6b, 6c, 6d, 6e, 6f, 6g, 6h) abgesichert ist, wobei die Sicherungseinrichtung (6a, 6b, 6c, 6d, 6e, 6f, 6g, 6h) ein Navigations-Modul (8), eine Kamera (10) und eine Datenübertragungseinrichtung (12) zur drahtlosen Datenübertragung aufweist, wobei die Sicherungseinrichtung (6a, 6b, 6c, 6d, 6e, 6f, 6g, 6h) dazu ausgebildet ist einen Positions-Datensatz (PDS) indikativ für eine aktuelle Ist-Position der Sicherungseinrichtung (6a, 6b, 6c, 6d, 6e, 6f, 6g, 6h) mit dem Navigations-Modul (8) zu bestimmen, den Positions-Datensatz (PDS) zu einer Zentralrechnereinheit (14) zu übertragen, einen Referenzbild-Datensatz (RDS) mit der Kamera (10) indikativ für einen initialen Zustand der Absicherung zu erfassen, den Referenzbild-Datensatz (RDS) zu der Zentralrechnereinheit (14) zu übertragen, einen Kontrollbild-Datensatz (KDS) indikativ für einen aktuellen Zustand der Absicherung zu erfassen, den Kontrollbild-Datensatz (KDS) zu der Zentralrechnereinheit (14) zu übertragen, wobei die Zentralrechnereinheit (14) dazu ausgebildet ist einen Korrektur-Datensatz (KRS) zur Korrektur des Positions-Datensatzes (PDS) durch Auswerten zumindest des Referenzbild-Datensatzes (BDS) und des Kontrollbild-Datensatzes (KDS) zu bestimmen, den Positions-Datensatz (PDS) mit dem Korrektur-Datensatz (KRS) zu korrigieren um einen korrigierten Positions-Datensatz (PDS`) zu erzeugen, eine Ist-Position gemäß dem korrigierten Positions-Datensatz (PDS`) mit einer vorbestimmten Soll-Position der Sicherungseinrichtung (6a, 6b, 6c, 6d, 6e, 6f, 6g, 6h) zu vergleichen und ein Alarmsignal (AS1) zu erzeugen, wenn die Ist-Position von der Soll-Position abweicht.
8. System (2) nach Ziffer 7, wobei die Zentralrechnereinheit (14) dazu ausgebildet ist, zum Bestimmen eines Korrektur-Datensatzes (KRS) einen optisch markanten Referenzpunkt (RP) in dem Bild-Datensatz (BDS) zu suchen, einen Referenzpunktpositions-Datensatz (RDS) indikativ für eine Position des optisch markanten Referenzpunkt (RP) zu bestimmen, den optisch markanten Referenzpunkt (RP) in dem Kontrollbild-Datensatz (KDS) zu suchen, einen Kontrollpunktpositions-Datensatz (KPS) indikativ für eine Position des optisch markanten Referenzpunkt (RP) in dem Kontrollbild-Datensatz (KDS) zu bestimmen, und den Korrektur-Datensatz (KRS) durch Vergleichen des Referenzpunktpositions-Datensatzes (RDS) mit dem Kontrollpunktpositions-Datensatz (KPS) zu bestimmen.
9. System (2) nach Ziffer 8, wobei zum Suchen des optisch markanten Referenzpunktes (RP) in dem Referenzbild-Datensatz (KDS) und/oder zum Suchen des optisch markanten Referenzpunktes (RP) in dem Kontrollbild-Datensatz (KDS) die Zentralrechnereinheit (14) ein trainiertes künstliches neuronales Netz (16) aufweist.
10. System (2) nach einer der Ziffern 7 bis 9, wobei die Zentralrechnereinheit (14) dazu ausgebildet ist, den Referenzbild-Datensatz (RDS) mit dem Kontrollbild-Datensatz (KDS) zu vergleichen um Beschädigungen der Absicherung zu erfassen und ein weiteres Alarmsignal (AS2) zu erzeugen, wenn Beschädigungen erfasst wurden.
11. System (2) nach Ziffer 12, wobei die Zentralrechnereinheit (14) zum Erfassen von Beschädigungen der Absicherung ein weiteres trainiertes künstliches neuronales Netz (40) aufweist.
12. Sicherungseinrichtung (6a, 6b, 6c, 6d, 6e, 6f, 6g, 6h) für ein System (2) nach einer der Ziffern 7 bis 11.

### Bezugszeichenliste

- 2: System
- 4: Straßenbaustelle
- 6: Sicherungseinrichtung
- 8: Navigations-Modul
- 10: Kamera
- 12: Datenübertragungseinrichtung
- 14: Zentralrechnereinheit
- 16: Empfangs-Modul
- 18: Auswahl-Modul
- 20: Speicher
- 22: Korrektur-Modul
- 24: Such-Modul
- 26: Referenzpunkt-Modul
- 28: Vergleichs-Modul
- 30: Anpassungs-Modul
- 32: Auswerte-Modul
- 34: Schadenserfassungs-Modul
- 36: Alarm-Modul
- 38: künstliches neuronales Netz
- 40: weiteres künstliches neuronales Netz
- 42: faltendes neuronales Netz
- 44: convolutional layer
- 46: pooling layer
- 48: mehrschichtiges neuronales Netz
- 50: Eingangsschicht
- 52: Zwischenschichten
- 54: Ausgangsschicht
- 56: Autoencoder
- 58: Encoder
- 60: Generator
- 62: Diskriminator
- AS1: Alarmsignal
- AS2: Alarmsignal
- BF: Blickfeld
- EPD: exakter Positions-Datensatz
- KDS: Kontrollbild-Datensatz
- KPS: Kontrollpunktpositions-Datensatz
- KRS: Korrektur-Datensatz
- PDS: Positions-Datensatz
- PDS': korrigierter Positions-Datensatz
- RDS: Referenzbild-Datensatz
- RP: Referenzpunkt
- V1: logische Variable
- V2: logische Variable

- S100: Schritt
- S200: Schritt
- S300: Schritt
- S400: Schritt
- S500: Schritt
- S600: Schritt
- S700: Schritt
- S800: Schritt
- S810: Unterschritt
- S820: Unterschritt
- S830: Unterschritt
- S840: Unterschritt
- S850: Unterschritt
- S900: Schritt
- S1000: Schritt
- S1100: Schritt
- S1200: Schritt
- S1300: Schritt

## Patentansprüche

1. Verfahren zur Steigerung der Genauigkeit der Positionserfassung von Sicherungselementen (6a, 6b, 6c, 6d, 6e, 6f, 6g, 6h) einer Absicherung, wobei Daten eines satellitengestützten Navigationssystems mit Daten ergänzt werden, die durch Auswertung von einem Vergleich von ersten Bilddaten mit zweiten Bilddaten gewonnen werden, wobei die ersten Bilddaten repräsentativ für den Zustand der Absicherung zum Zeitpunkt ihrer Inbetriebnahme und die zweiten Bilddaten repräsentativ für den Zustand der Absicherung zu einem späteren Kontrollzeitpunkt sind.

2. Verfahren nach Anspruch 1, mit den folgenden Schritten:
(S100) Aufbauen der Absicherung mit den Sicherungselementen (6a, 6b, 6c, 6d, 6e, 6f, 6g, 6h), wobei den Sicherungselementen (6a, 6b, 6c, 6d, 6e, 6f, 6g, 6h)ein Navigations-Modul (8) des satellitengestützten Navigationssystems, eine Kamera (10) zum Gewinnen der ersten und zweiten Bilddaten und eine Datenübertragungseinrichtung (12) zur drahtlosen Datenübertragung zugeordnet sind,
(S200) Bestimmen von einem Positions-Datensatz (PDS) indikativ für eine aktuelle Ist-Position der Sicherungselemente (6a, 6b, 6c, 6d, 6e, 6f, 6g, 6h) mit dem Navigations-Modul (8) als Daten des satellitengestützten Navigationssystems,
(S300) Übertragen des Positions-Datensatzes (PDS) zu einer Zentralrechnereinheit (14),
(S400) Erfassen von einem Referenzbild-Datensatz (RDS) als erste Bilddaten mit der Kamera (10) indikativ für einen initialen Zustand der Absicherung,
(S500) Übertragen des Referenzbild-Datensatzes (RDS) zu der Zentralrechnereinheit (14),
(S600) Erfassen eines Kontrollbild-Datensatzes (KDS) als zweite Bilddaten indikativ für einen aktuellen Zustand der Absicherung,
(S700) Übertragen des Kontrollbild-Datensatzes (KDS) zu der Zentralrechnereinheit (14),
(S800) Bestimmen eines Korrektur-Datensatzes (KRS) zur Korrektur des Positions-Datensatzes (PDS) durch Auswerten zumindest des Referenzbild-Datensatzes (RDS) und des Kontrollbild-Datensatzes (KDS),
(S9000) Korrigieren des Positions-Datensatzes (PDS) mit dem Korrektur-Datensatz (KRS) um einen korrigierten Positions-Datensatz (PDS`) zu erzeugen,
(S10000) Vergleichen einer Ist-Position gemäß dem korrigierten Positions-Datensatz (PDS`) mit einer vorbestimmten Soll-Position der Sicherungselemente (6a, 6b, 6c, 6d, 6e, 6f, 6g, 6h), und
(S11000) Erzeugen eines Alarmsignals (AS1), wenn die Ist-Position von der Soll-Position abweicht.

3. Verfahren nach Anspruch 2, wobei zum Bestimmen des Korrektur-Datensatzes (KRS) die folgenden Teilschritte durchgeführt werden:
(S810) Suchen eines optisch markanten Referenzpunktes (RP) in dem Referenzbild-Datensatz (RDS),
(S820) Bestimmen eines Referenzpunktpositions-Datensatzes (RDS) indikativ für eine Position des optisch markanten Referenzpunkt (RP), (S830) Suchen des optisch markanten Referenzpunkte (RP) in dem Kontrollbild-Datensatz (KDS),
(S840) Bestimmen eines Kontrollpunktpositions-Datensatzes (KPS) indikativ für eine Position des optisch markanten Referenzpunkt (RP) in dem Kontrollbild-Datensatz (KDS), und
(S850) Bestimmen des Korrektur-Datensatzes (KRS) durch Vergleichen des Referenzpunktpositions-Datensatzes (RDS) mit dem Kontrollpunktpositions-Datensatzes (KPS).

4. Verfahren nach Anspruch 3, wobei zum Suchen des optisch markanten Referenzpunktes (RP) in dem Referenzbild-Datensatz (BDS) im Schritt (S810) und/oder zum Suchen des optisch markanten Referenzpunktes (RP) in dem Kontrollbild-Datensatz (KDS) im Schritt (S830) ein trainiertes künstliches neuronales Netz (16) verwendet wird.

5. Verfahren nach einem der Ansprüche 2 bis 4, wobei in einem weiteren Schritt (S12000) der Referenzbild-Datensatz (RDS) mit dem Kontrollbild-Datensatz (KBS) verglichen wird um Beschädigungen der Absicherung zu erfassen, und in einem weiteren Schritt (S13000) ein weiteres Alarmsignal (AS2) erzeugt wird, wenn Beschädigungen erfasst wurden.

6. Verfahren nach Anspruch 5, wobei zum Erfassen von Beschädigungen der Absicherung im Schritt (S1200) ein weiteres trainiertes künstliches neuronales Netz (40) verwendet wird.

7. Computerprogrammprodukt, ausgebildet zum Ausführen eines Verfahrens nach einem der Ansprüche 1 bis 6.

8. System (2) zur Steigerung der Genauigkeit der Positionserfassung von Sicherungselementen (6a, 6b, 6c, 6d, 6e, 6f, 6g, 6h) einer Absicherung, wobei das System (2) dazu ausgebildet ist Daten eines satellitengestützten Navigationssystems mit Daten zu ergänzen, die durch Auswertung von einem Vergleich von ersten Bilddaten mit zweiten Bilddaten gewonnen werden, wobei die ersten Bilddaten repräsentativ für den Zustand der Absicherung zum Zeitpunkt ihrer Inbetriebnahme und die zweiten Bilddaten repräsentativ für den Zustand der Absicherung zu einem späteren Kontrollzeitpunkt sind.

9. System (2) nach Anspruch 8, wobei den Sicherungselementen (6a, 6b, 6c, 6d, 6e, 6f, 6g, 6h) ein Navigations-Modul (8) des satellitengestützten Navigationssystems, eine Kamera (10) zum Gewinnen der ersten und zweiten Bilddaten und eine Datenübertragungseinrichtung (12) zur drahtlosen Datenübertragung zugeordnet sind, wobei die Sicherungselemente (6a, 6b, 6c, 6d, 6e, 6f, 6g, 6h) dazu ausgebildet sind einen Positions-Datensatz (PDS) als Daten des satellitengestützten Navigationssystems indikativ für eine aktuelle Ist-Position der Sicherungseinrichtung (6a, 6b, 6c, 6d, 6e, 6f, 6g, 6h) mit dem Navigations-Modul (8) zu bestimmen, den Positions-Datensatz (PDS) zu einer Zentralrechnereinheit (14) zu übertragen, einen Referenzbild-Datensatz (RDS) als erste Bilddaten mit der Kamera (10) indikativ für einen initialen Zustand der Absicherung(6a, 6b, 6c, 6d, 6e, 6f, 6g, 6h) zu erfassen, den Referenzbild-Datensatz (RDS) zu der Zentralrechnereinheit (14) zu übertragen, einen Kontrollbild-Datensatz (KDS) als zweite Bilddaten indikativ für einen aktuellen Zustand der Absicherung zu erfassen, den Kontrollbild-Datensatz (KDS) zu der Zentralrechnereinheit (14) zu übertragen, wobei die Zentralrechnereinheit (14) dazu ausgebildet ist (6a, 6b, 6c, 6d, 6e, 6f, 6g, 6h)einen Korrektur-Datensatz (KRS) zur Korrektur des Positions-Datensatzes (PDS) durch Auswerten zumindest des Referenzbild-Datensatzes (BDS) und des Kontrollbild-Datensatzes (KDS) zu bestimmen, den Positions-Datensatz (PDS) mit dem Korrektur-Datensatz (KRS) zu korrigieren um einen korrigierten Positions-Datensatz (PDS`) zu erzeugen, eine Ist-Position gemäß dem korrigierten Positions-Datensatz (PDS`) mit einer vorbestimmten Soll-Position der Sicherungseinrichtung (6a, 6b, 6c, 6d, 6e, 6f, 6g, 6h) zu vergleichen und ein Alarmsignal (AS1) zu erzeugen, wenn die Ist-Position von der Soll-Position abweicht.

10. System (2) nach Anspruch 9, wobei die Zentralrechnereinheit (14) dazu ausgebildet ist, zum Bestimmen eines Korrektur-Datensatzes (KRS) einen optisch markanten Referenzpunkt (RP) in dem Bild-Datensatz (BDS) zu suchen, einen Referenzpunktpositions-Datensatz (RDS) indikativ für eine Position des optisch markanten Referenzpunkt (RP) zu bestimmen, den optisch markanten Referenzpunkt (RP) in dem Kontrollbild-Datensatz (KDS) zu suchen, einen Kontrollpunktpositions-Datensatz (KPS) indikativ für eine Position des optisch markanten Referenzpunkt (RP) in dem Kontrollbild-Datensatz (KDS) zu bestimmen, und den Korrektur-Datensatz (KRS) durch Vergleichen des Referenzpunktpositions-Datensatzes (RDS) mit dem Kontrollpunktpositions-Datensatz (KPS) zu bestimmen.

11. System (2) nach Anspruch 10, wobei zum Suchen des optisch markanten Referenzpunktes (RP) in dem Referenzbild-Datensatz (KDS) und/oder zum Suchen des optisch markanten Referenzpunktes (RP) in dem Kontrollbild-Datensatz (KDS) die Zentralrechnereinheit (14) ein trainiertes künstliches neuronales Netz (16) aufweist.

12. System (2) nach einem der Ansprüche 9 bis 11, wobei die Zentralrechnereinheit (14) dazu ausgebildet ist, den Referenzbild-Datensatz (RDS) mit dem Kontrollbild-Datensatz (KDS) zu vergleichen um Beschädigungen der Absicherung zu erfassen und ein weiteres Alarmsignal (AS2) zu erzeugen, wenn Beschädigungen erfasst wurden.

13. System (2) nach Anspruch 12, wobei die Zentralrechnereinheit (14) zum Erfassen von Beschädigungen der Absicherung ein weiteres trainiertes künstliches neuronales Netz (40) aufweist.

14. Sicherungselement (6a, 6b, 6c, 6d, 6e, 6f, 6g, 6h) für ein System (2) nach einem der Ansprüche 9 bis 13.
